Europäisches Patentamt

European Patent Office

Office européen des brevets

Publication number: **0 279 966**
A1

# EUROPEAN PATENT APPLICATION

Application number: 87300929.4

Date of filing: 03.02.87

Int. Cl.4 **B01L 3/02** , G01F 13/00 , G01F 11/02

Date of publication of application:
31.08.88 Bulletin 88/35

Designated Contracting States:
**AT BE CH DE FR GB IT LI NL SE**

Applicant: **Harris, Arthur Milton**
**133 Rocky Point Road**
**Palos Verdes Estates California 90274(US)**

Inventor: **Harris, Arthur Milton**
**133 Rocky Point Road**
**Palos Verdes Estates California 90274(US)**

Representative: **Warren, Anthony Robert et al**
**BARON & WARREN 18 South End Kensington**
**London W8 5BU(GB)**

## Improved fluid metering device.

A precision reagent metering and delivery device includes an externally threaded, disposable liquid reagent container (62) threadably receivable within an internally threaded base (60). The top wall of the container has a fluid passageway (73) connected to a fluid delivery tube (84). A plunger (76) is axially slidable in the container and is coupled to a stator (66) carried by the base. Rotation of the base (60) via a drive (M, 94, 90) relative to the container (62) screws the container down into the base, causing precisely predeterminable axial advance of the plunger (76) within the container, whereby the reagent within the container will be controllably forced out the delivery tube (84) in precisely determinable amounts.

The base (60) is divided in its axial direction, and comprises two base portions (60a, 60b) which may be swung about a pivot (70) between a closed position in which the threads of the container and base are engaged, to an open position in which the threads are disengaged to permit a spent container to be quickly discarded.

Fig.6

## IMPROVED FLUID METERING DEVICE

The present invention relates generally to fluid metering or dispensing devices. More particularly the invention concerns an improved precision liquid reagent metering and delivery device having a rotating base and a fixed reagent container.

There exists in the prior art a wide variety of volumetric devices for dispensing liquids such as reagents. On one end of the spectrum is the simple manual type, such as the pipette, wherein a quantity of liquid is sucked up into a graduated tube and then discharged as a metered quantity. On the other end of the spectrum are various highly sophisticated mechanical and electromechanical devices adapted to reproducably dispense precise quantities of liquid from conventional or specially designed reagent containers. The manual type devices often lack the necessary precision, while the mechanized devices frequently are unduly complex, extremely costly and, in many instances, tend to fail or malfunction in continuous use.

The apparatus disclosed in U.S. Patent No. 3,834,24l issued to Garren et al and in U.S. Patent No. 4,054,06l issued to Valt are exemplary of manual type pipette devices.

The apparatus disclosed in U.S. Patent No. 3,931,9l5 issued to Downings et al and in U.S. Patent No. 4,l0l,283 issued to Sundstrom are exemplary of mechanical and electromechanical dispensing devices. The latter mentioned Sundstrom device is specifically adapted for use in accurately pipetting specified digitally programmed volumes of sample and the delivery of likewise specified, digitally programmed, volumes of reagent. The thrust of the Sundstrom invention is directed toward the provision of a specially constructed plunger which is rotated within a non-threaded reagent container. Rotation of the plunger is controlled by a relatively sophisticated light-photo cell system which is operably interconnected with motor means through somewhat complex counting and connecting circuits. As a result of the particular configuration of the Sundstrom plunger, it cuts grooves in the inner wall of the reagent container as it rotates.

One of the most successful reagent metering and dispensing devices developed to date is described in my co-pending European Patent Application No: 84308439.3 (Publication No. 0l44240).

The device of the present invention is an improvement of the device described in the aforesaid European application and is readily distinguishable from the prior art in that it enables the solution of the problems inherent in the precision delivery of large or small liquid aliquots, in that it is capable of providing a relatively simple, inexpensive and positive acting, but yet highly precise device for accurate reagent metering and delivery. As will be appreciated from the description which follows, because of its simplicity, the device embodying the present invention is easy to maintain and clean, is highly reliable in operation and can readily be operated by unskilled, non-professional personnel.

It is an object of the present invention to provide a relatively simple, highly reliable and easy to operate rotating base device which uniquely solves the problem of high precision and accuracy in reagent metering and delivery.

Additionally or alternatively, it is an object of the invention to provide a device of the aforementioned character in which the component parts which make up the device are of relatively simple design and can be manufactured of inexpensive, easily fabricated and readily available materials.

Additionally or alternatively, it is an object of the invention to provide a device of the character described in the previous paragraphs which is relatively simple to clean and maintain.

Additionally or alternatively, it is an object of the invention to provide a device of the class described which makes use of disposable reagent containers which can be readily installed by non-professional personnel with mimimum system downtime.

In one embodiment of the present invention, the device comprises an externally threaded, disposable reagent container threadably receivable within an internally threaded rotatable base. Sealably mounted within the reagent container for reciprocal movement axially thereof is a plunger. The container or the plunger has a fluid passageway leading from the interior of the container to the exterior of the device. The plunger is operably coupled with a member, such as a stator or column, disposed in the base so that rotation of the base relative to the reagent container will cause a precisely predeterminable axial movement of the plunger within the reagent container. This controlled axial movement of the plunger causes the reagent to be controllably forced out of the container via the fluid passageway with great precision.

The positional terms such as "bottom" and "top" employed in the description and appended claims are related to the device when oriented as shown in the drawings. However, these terms are used merely to assist in understanding the invention, and it is to be understood that the claims are to be construed as encompassing other orientations of the device.

In order that the invention may be more readily understood, reference will now be made to the accompanying drawings, in which:-

Figure I is an exploded, side-elevational, cross-sectional view of a reagent metering and delivery device according to one embodiment of the invention;

Figure 2 is a view similar to Figure I, but showing the component parts of the device in a threadably mated relationship;

Figure 3 is a cross-sectional view taken along lines 3-3 of Figure 2;

Figure 4 is a diagrammatic plan view of the device embodying the invention, showing diagrammatically one type of driving mechanism;

Figure 5 is an exploded, side-elevational, cross-sectional view of another form of a reagent metering and delivery device embodying the invention;

Figure 6 is a view similar to Figure 5, but showing the component parts of the device in a threadably mated relationship;

Figure 7 is a view taken along lines 7-7 of Figure 5;

Figure 8 is a cross-secitonal view taken along lines 8-8 of Figure 6;

Figure 9 is a view taken along lines 9-9 of Figure 6;

Figure I0 is a cross-sectional view similar to Figure 6, but showing the base portion of the device pivoted into an open position to permit rapid removal of the reagent container;

Figure II is a fragmentary, generally perspective view of one half of the base portion of the device;

Figure I2 is a side elevational, cross-sectional view of yet another form of reagent metering and delivery device embodying the invention.

Referring to Figures I to 3, a first form of reagent metering and delivery device embodying the invention is shown. The device comprises a generally cylindrically shaped, internally threaded hollow base I2 and a generally cylindrically shaped, externally threaded reagent container I4 adapted to be threadably received in the base I2. Base I2 includes a bottom closure wall I6 and a plunger-displacing means or stator, shown here in the form of a hollow, upstanding stanchion or column I8, mounted on wall I6 and extending axially upwardly within the hollow base I2 and terminating at an upper end portion 20.

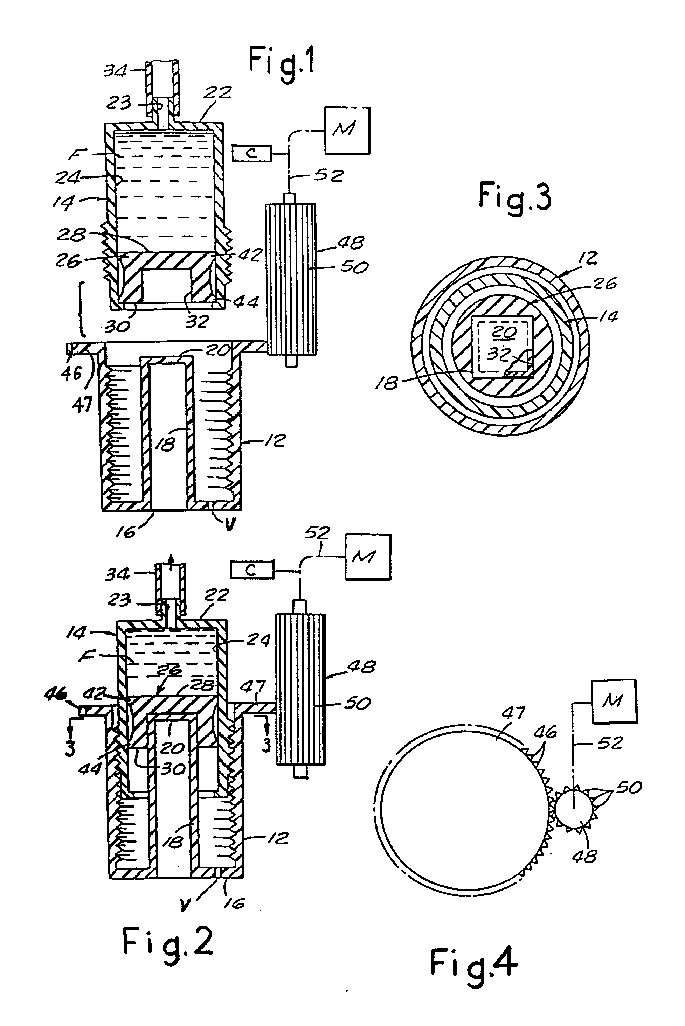

As indicated in Figure 2, base I2 is adapted to be threadably interconnected with container I4 upon rotation of the base relative to the container. Rotation of base I2 may be accomplished manually, or, in a manner presently to be discussed, it may be accomplished by a mechanical drive means for controllably rotating the base relative to the reagent container I4. The top of reagent container I4 is closed by a top closure wall 22 which is provided with a fluid passageway 23 leading to the exterior of the device. In this embodiment the inner wall 24 of the container is generally cylindrical in shape.

Mounted for reciprocal, or axial, movement within the reagent container I4 is a generally cylindrically shaped metering piston or plunger 26 having upper and lower walls 28 and 30 respectively. Formed within bottom wall 30 of the plunger is connecting means for operably interconnecting the plunger with the stator, or upstanding column, I8 provided in base I2 . In this embodiment, this connecting means is provided in the form of a cavity 32 which, as shown in Figure 3, is generally rectangular in cross-section and is adapted to closely receive the upper end portion 20 of upstanding column I8 .

A fluid delivery means is provided for conducting fluid from the interior of reagent container I4 to the exterior of the device. The fluid delivery means is here provided in the form of a tubular conduit 34 which is suitable interconnected with fluid passageway 23.

To prevent leakage of fluid between plunger 26 and the inner cylindrical wall 24 of reagent container I4 , plunger 26 is provided with sealing means adapted to sealably engage the inner wall 24 of the reagent container as the plunger moves reciprocally within the reagent container. In this embodiment, the sealing means comprises a pair of axially spaced apart, circumferentially extending skirts 42 and 44 , the outer edges of which press resiliently against inner wall 24 of the reagent container. While sealing skirts are shown in the drawings, it is to be understood that one or more conventional type elastomeric O-rings could additionally or alternatively be used as the sealing means.

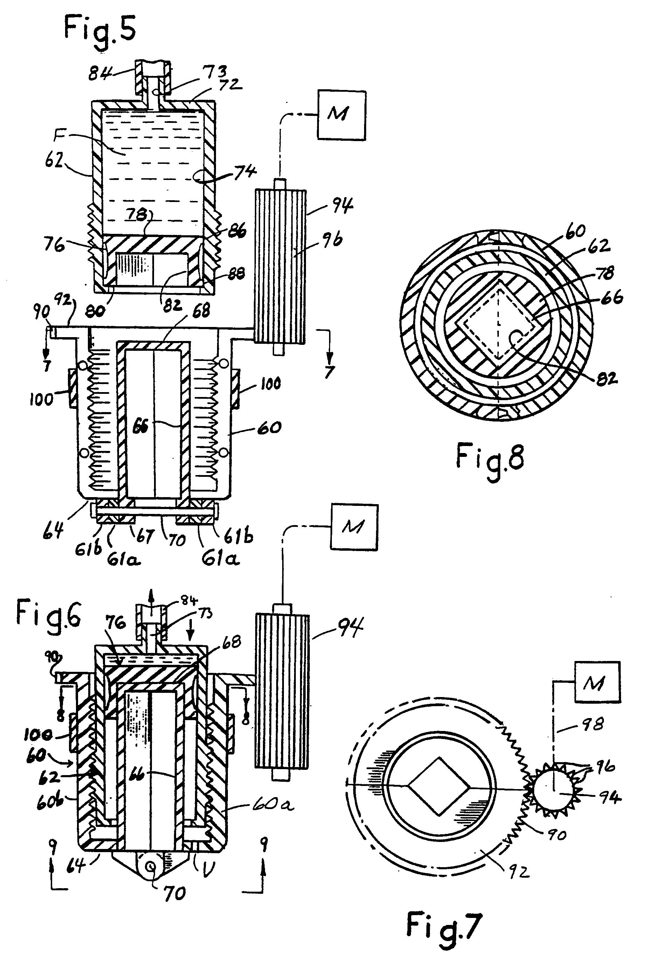

As best seen by also referring to Figure 4, the drive means comprises a multiplicity of gear teeth or splines 46 formed about the periphery of a flange 47 provided at the upper end of base I2. A drive roller 48, also having a multiplicity of splines 50 provided about its periphery, is adapted to mateably engage and controllably drive the base I2 . A motor means M is operably interconnected with drive roller 48 by a suitable driving connection shown schematically in the drawings and indicated by the numeral 52 . Depending upon the end use to be made of the device, the drive means may take any number of forms well known to those skilled in the art. For example, it may comprise a portable driving mechanism including a housing within which drive roller 48 is rotatably carried. In this instance, the drive roller can, if desired, be interconnected with motor M by a flexible shaft. Alternatively the drive means may be fixed and include a housing fixedly mounted in close proximity to base I2 with drive roller 48 carried therewithin and adapted to be driven by a suitable drive train interconnected with motor M. Of course, the base may also be rotated by hand. The design of drive means of the character described are well within the skill of the art and their precise construction need not be described herein.

In operation, when the parts are mated in the manner shown in Figure 2, rotation of base 12 relative to the non-rotating container 14 will cause the base 12 to travel upwardly in relation to plunger 26 , which is operably connected to the stator 18 .

Since the sealing means, such as the skirts 42 and 44 , provided on plunger 26 prevents the fluid F contained within container 14 from passing between the plunger and the inner wall 24 of the container, the fluid will be forced outwardly of the device through delivery tube 34 . The amount of fluid passing through the delivery tube is precisely proportioned to the travel of base 12 along the threads of container 14 as base 12 is rotated by the drive means. Accordingly, by closely controlling the rotation of the base 12 the delivery of the fluid from the device can be precisely and accurately controlled. More specifically by providing very fine threads on the mating parts and through close control of the drive means, high precision and accuracy in the delivery of small or large liquid aliquots can consistently be achieved. As best seen in Figure 2, a vent "V" is formed in bottom wall 16 to permit venting of the base during operation of the device.

Another important feature of the present form of the device comprises counter means for measuring the extent of rotation of base 12 relative to container 14 and for providing an automatic readout of the fluid dispensed. It is apparent that the travel of the plunger 26 is directly proportional to the extent of rotation of the base relative to the container. It is equally apparent that the amount of fluid dispensed is directly proportional to the degree of travel of the plunger within the container. Accordingly, by measuring with a suitable counter "C" (Figures I and 2) the extent of rotation of the base relative to the container the amount of fluid dispensed can readily be calculated in a manner well known to those skilled in the art. The calculations of fluid dispensed as well as the instrumentation required to provide a direct readout thereof are well understood and will not be discussed in detail herein.

Because the device embodies a minimum number of moving parts and due to the fact that the drive means is external of the unit and easily accessible, the device is highly reliable, readily maintainable and simple to operate.

Referring now to Figures 5 to 8, another form of the reagent metering and delivery device embodying the invention comprises a generally cylindrically shaped, internally threaded hollow base 60 and a generally cylindrically shaped, externally threaded reagent container 62. In this form of the device, the base 60 is made up of two hingably interconnected parts 60a and 60b (Figure II) which, in the closed position shown in Figure 6, define a bottom closure wall 64, and a stator, shown here in the form of a hollow, upstanding column 66, extending axially upwardly within the hollow base 60 and terminating at an upper end portion 68.

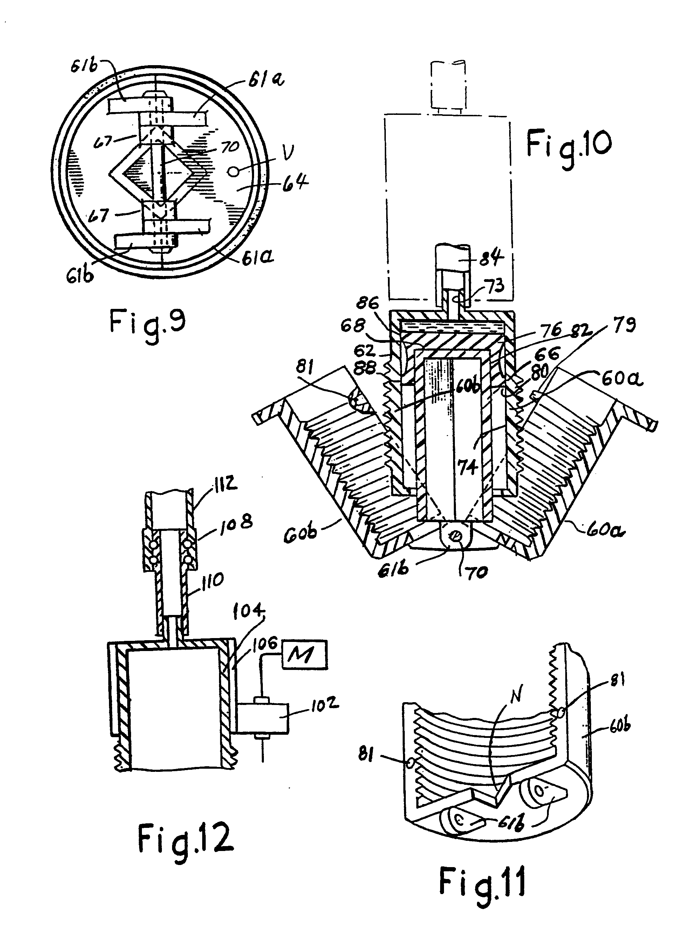

Turning also to Figures 9, 10 and 11, parts 60a and 60b are provided with downwardly depending, transversely spaced ears 61a and 61b respectively. These ears are constructed so as to mate in the manner shown in Figure 9 and each is apertured to receive a pivot pin 70 which extends through the apertured ears and about which the parts pivot into the open position shown in Figure 10. As will be discussed more fully hereinafter, this novel pivoting feature permits the rapid removal of the reagent container after the reagent has been ejected therefrom. Provided proximate the lower extremity of stator 66 are spaced apart apertured ears 67 through which pin 70 also passes in the manner shown in Figure 5. With this arrangement, the stator and the clam shell-like base portions 60a and 60b are interconnected to form the base assembly of the device, which in the closed position, operates in basically the same manner as base 12 of the previously described embodiment.

As best seen in Figure 6, when the portions 60a and 60b are in the closed position, base 60 is adapted to be threadably interconnected with container 62 upon rotation of the base relative to the container. Rotation of base 60 may be accomplished manually, or, as in the case of the previously described embodiment, it may be accomplished by a mechanical drive means for controllably rotating the base relative to the reagent container 62. The top of reagent container 62 is closed by a top closure wall 72 which is provided with a fluid passageway 73 leading to the exterior of the device. In this form of the device the inner wall 74 of the container is generally cylindrical in shape.

Mounted for reciprocal, or axial, movement within the reagent container 62 is a generally cylindrically shaped plunger 76 having upper and lower walls 78 and 80 respectively. Formed within bottom wall 80 of the plunger is connecting means for operably interconnecting the plunger with the stator, or upstanding column, 66 provided in base 60. In this embodiment of the invention, like that previously described, the connecting means is provided in the form of a cavity 82 which, as shown in Figure 8, is generally rectangular in cross-section and is adapted to closely receive the upper end portion 68 of upstanding column 66.

A fluid delivery means is provided for conducting fluid from the interior of reagent container 62 to the exterior of the device. This fluid delivery means is here provided in the form of a tubular conduit 84 which is suitable interconnected with fluid passageway 73.

To prevent leakage of fluid between plunger 76 and the inner cylindrical wall 74 of reagent container 62, plunger 76 is provided with sealing means adapted to sealably engage the inner wall 74 of the reagent container as the plunger moves reciprocally within the reagent container. In the present form of the device, this sealing means comprises a pair of axially spaced apart, circumferentially extending skirts 86 and 88, the outer edges of which press resiliently against inner wall 74 of the reagent container.

As best seen by also referring to Figure 7, the drive means of the present embodiment of the invention comprises a multiplicity of gear teeth or splines 90 formed about the periphery of a flange 92 provided at the upper end of base 62. A drive roller 94, also having a multiplicity of splines 96 provided about its periphery, is adapted to mateably engage and controllably drive the base 62. A motor means M is operably interconnected with drive roller 94 by a suitable driving connection shown schematically in the drawings and indicated by the numeral 98. As previously discussed, depending upon the end use to be made of the device, the drive means may take any number of forms well known to those skilled in the art.

In operation, when base portions 60a and 60b are closed and the parts are mated in the manner shown in Figure 6, rotation of base 60 relative to the non-rotating container 62 will cause the base 60 to travel upwardly in relation to plunger 76, which is operably connected to the stator 66.

Since the sealing means provided on plunger 76 prevents the fluid F contained within container 64 from passing between the plunger and the inner wall 74 of the container, the fluid will be forced outwardly of the device through delivery tube 84. The amount of fluid passing through the delivery tube is precisely proportioned to the travel of base 60 along the threads of container 62 as base 60 is rotated by the drive means. Accordingly, by closely controlling the rotation of the base 60 the delivery of the fluid from the device can be precisely and accurately controlled. As best seen in Figure 6, an air vent "V" is formed in the bottom wall 64 to permit venting of the device during operation.

Referring again to Figures 5 and 6, the base portions 60a and 60b are maintained in a closed position by a band 100 which circumscribes the base assembly. When the fluid within container 62 has been ejected, the band 100 is removed and the base portions are opened in the manner shown in Figure 10. This permits the spent container to be quickly discarded without the necessity of threadably disconnecting it from the base as is required in the embodiment of the invention shown in Figures 1 to 4. The base portions are then pivoted to the closed position shown in Figure 6 and the band 100 is replaced. Protuberances 79 which are receivable in mating cavities 81 formed in portion 60b (Figure 10) function to precisely align the base portions and a notched-out portion "N" in the base portions receives the stator (Figure 11). A new container can then be mated with the base assembly and the fluid dispensing operation repeated.

Turning to Figure 12, yet another embodiment of the invention is there shown. In this embodiment, the various component parts are of the same general configuration as previously described, save that here the base is held fixed and the container is rotated relative thereto by a motor M which is drivable coupled with toothed or splined drive 102. In this instance, the container 104 is provided with gear teeth or splines 106 which are adapted to mate with drive 102. Additionally, a swivel assembly 108 is provided to interconnect the supporting tube 110, which is connected to container 104 with a non-rotating supply conduit 112.

In the various embodiments, delivery via the tube 34 or other delivery means may be effected in a variety of ways, for example via a luer (not shown) connected to the upper or outer end of the conduit 34.

The components of the devices hereinbefore described may be made from a variety of materials, for example primarily synthetics plastics materials. In one specific embodiment, the base, plunger and column may be formed from acrylonitrile butadiene styrene (ABS) and the reagent container may be formed from a polyacetal such as Debrin (an acetal homopolymer manufactured by DuPont).

Whilst various embodiments of the invention have been described in detail, it will be understood that various changes or modifications may be made in the individual parts or their relative assembly in order to meet specific requirements or conditions. Such changes and modifications may be made without departing from the scope of the invention as claimed.

The devices hereinbefore described and illustrated may be modified to incorporate one or more features of the devices disclosed in the aforesaid European patent application. For example, in any of the embodiments herein described and illustrated, and in particular the Figure 12 embodiment in which the reagent container is rotated relative to a stationary base, the passageway in the top wall of the container may be replaced by a corresponding passageway in the plunger, communicating with, or connected or connectable to, a conduit passing down and out of the stator.

The plunger need not be coupled or locked to the stator and base so as to rotate therewith, but may be rotatable relative to the stator, so that the plunger will move axially,but need not rotate, within the reagent container.

The devices, and in particular the reagent container, may be filled via the same conduits, passageways, etc. which are employed to dispense the reagent, for example by operating the devices in reverse, i.e. by unscrewing the base relative to the reagent container, or vice versa.

The devices may be employed to remove or extract, instead of or in addition to dispensing, a metered quantity or metered quantities of reagents or other liquids, by unscrewing the base relative to the reagent container or vice versa.

The devices may be used to dispense and/or extract liquids other than reagents.

The container for reagents or other liquids need not be disposable, but may form a permanent part of the device. For example, the plunger and stator may be assembled together before insertion of the plunger into the container. After insertion of the plunger, the base is fitted to the container and stator. Alternatively, the plunger may be inserted into the empty container, whereafter the assembled base and stator are fitted to the container. By screwing the base fully home, the plunger will firstly be driven against the top wall of the container, and the upper end of the stator will then be driven into the cavity in the plunger, to assemble the plunger and stator together.

In the illustrated embodiments in which the container is disposable, the stator merely has to be capable of urging the plunger unidirectionally towards the top wall. However, in the embodiments just described in which the stator additionally or alternatively has to be capable of retracting the plunger away from the top wall, the stator is anchored to the plunger to permit bidirectional operation of the plunger. In the latter embodiments, the stator and plunger may be releasably or permanently secured together in a variety of ways, bonded together, or formed integrally with each other.

## Claims

1. A fluid metering device comprising:

(a) a threaded hollow base;

(b) plunger-displacing means mounted within the base;

(c) a threaded fluid container adapted to be threadably interconnected with the base, the container having an inner wall and a top closure wall;

(d) a fluid passageway leading from the interior of the container to the exterior of the device;

(e) a plunger cooperable with the plunger-displacing means and movable a precise axial distance within the container upon rotation of the base relative to the container, the plunger having sealing means adapted to sealably engage the inner wall of the container for preventing leakage of fluid between the plunger and inner wall upon axial movement of the plunger within the container.

2. A device as defined in claim 1, wherein the base comprises a base assemblage including first and second pivotally interconnected, internally threaded base portions movable from a first closed position wherein said base portions cooperate to define a generally cylindrically shaped internally threaded base assemblage, to a second open position wherein said base portions are spaced apart, the container being threadedly interconnected with the base assemblage, and the plunger cooperating with the plunger-displacing means, in said first closed position of the base assemblage.

3. A fluid metering device, comprising:

(a) a base comprising a base assemblage including first and second pivotally interconnected, internally threaded base portions movable from a first closed position wherein the base portions cooperate to define a generally cylindrically shaped internally threaded base assemblage, to a second open position wherein the base portions are spaced apart;

(b) plunger-displacing means mounted within the base assemblage;

(c) a threaded fluid container adapted to be threadably interconnected with the base assemblage in said first closed position, the container having an inner wall and a top closure wall;

(d) a fluid passageway leading from the interior of the container to the exterior of the device;

(e) a plunger cooperable with the plunger-displacing means and axially movable within the container upon relative rotational movement between the base and container, the plunger having sealing means adapted to sealably engage the inner wall of the container for preventing leakage of fluid between the plunger and inner wall.

4. A device as defined in claim 2 or 3, in which each of said first and second base portions is provided with spaced apart ears extending from a bottom wall of the base, each of the ears having an aperture therethrough, and in which the base portions are adapted to pivot from the first closed position to the second open position about an axis extending through the apertures formed in the ears.

5. A device as defined in claim 4, in which the plunger-displacing means comprises a stator or column provided with spaced apart bosses each having an aperture therethrough adapted to align with the apertures formed in the ears.

6. A device as defined in claim 5, including a pivot pin adapted to be closely received within the apertures of the bosses and the apertures of the ears, whereby the first and second base portions will move pivotally about the pivot pin from said first closed position to said second open position.

7. A device as defined in any preceding claim, in which said plunger-displacing means is a rigid upstanding stator or column mounted centrally of said hollow base and carried by a bottom closure wall of the base, and including connecting means for operably interconnecting the plunger with the upstanding column, said connecting means comprising a cavity formed in the plunger adapted to closely receive the upper end of the column.

8. A device as defined in claim 7, wherein said connecting means is adapted to prevent relative rotation between the plunger and column.

9. A device as defined in claim 8, in which the base, plunger and container are generally circular in cross-section, both the upstanding column, or at least the upper end thereof,and cavity in the plunger, are non-circular in cross-section, and the upper end of the column is removably receivable in the cavity.

10. A device as defined in any preceding claim, wherein the fluid passageway is provided in the top closure wall of the container.

11. A device as defined in any preceding claim, including a conduit interconnecting the fluid passageway with the exterior of the device.

12. A device as defined in any preceding claim, in which the sealing means comprises at least one resilient annular skirt formed on the periphery of the plunger, the outer edge of which presses resiliently against the inner wall of the container.

13. A device as defined in any preceding claim, including drive means for controllably rotating the base about the container, and means for measuring the extent of rotation of the base about the container whereby the amount of fluid dispensed can be determined.

14. A fluid metering device comprising:

(a) a generally cylindrically shaped, internally threaded hollow base;

(b) a rigid upstanding column carried by the base and extending axially upwardly within the hollow base terminating in an upper end portion;

(c) a generally cylindrically shaped, externally threaded fluid container adapted to be threadably received within the hollow base, the container having a generally cylindrical inner wall and a top closure wall provided with a fluid passageway therethrough;

(d) a generally cylindrically shaped plunger having an upper and a lower wall, the plunger being axially movable within the container, the plunger having:

(i) sealing means comprising at least one resilient, circumferentially extending skirt formed on the periphery of the plunger, the outer edge of which presses resiliently against the inner wall of the container; and

(ii) connecting means for operably interconnecting the plunger with the upstanding column, said connecting means comprising a cavity formed in the lower wall of the plunger adapted to closely receive the upper end portion of the column; and

(f) drive means for rotating the base relative to the container when threadedly interconnected therewith, thereby to effect axial movement of the plunger within the container.

15. A device as defined in claim 14, in which both the cavity and the upper end portion of the column are generally rectangular in cross-section, thereby to prevent rotation of the plunger relative to the base.

16. A device as defined in claim 14 or 15, in which the base includes a flange portion having a plurality of splines formed thereon; and in which the drive means comprises a drive member adapted to drivably engage the splines, and motor means for driving the drive member.

17. A fluid metering device comprising:

(a) a generally cylindrically shaped, internally threaded base;

(b) an upstanding rigid column carried by the base and extending axially upwardly within the base terminating in an upper end portion;

(c) a generally cylindrically shaped, externally threaded fluid container adapted to be threadably received within the hollow base, the container having a generally cylindrical inner wall, an outer wall, and a top closure wall;

(d) a fluid passageway leading from the interior of the container to the exterior of the device;

(e) a generally cylindrically shaped plunger having an upper and a lower wall, the plunger being axially movable within said container upon relative rotation between the base and container, the plunger having:

(i) sealing means adapted to sealably engage the inner wall of the container for preventing leakage of fluid between the plunger and inner wall; and

(ii) connecting means for operably interconnecting the plunger with the upstanding column,

(f) drive means including a rotatable drive having circumferentially spaced splines adapted to mate with circumferentially spaced splines provided on and around container or base, for rotating the splined container or base relative to the unsplined base or container upon rotation of the drive; and

(g) means for measuring the extent of rotation of the rotatable drive, and therefore the extent of relative rotation between the base and container, whereby the amount of fluid dispensed can be precisely determined.

18. A device as defined in any preceding claim, which comprises a liquid reagent metering and delivery device.

Fig.1

34
23
22
M
C
52
F
24
14
28
26
42
48
50
30
32
44
46
47
20
18
12
16
V

Fig.3

12
26
14
20
32
18

52
M
C
34
23
22
F
14
24
26
28
46
42
47
48
50
3
3
44
20
30
18
12
16
V

Fig.2

47
46
M
52
50
48

Fig.4

Fig.5

Fig.8

Fig.6

Fig.7

Fig.9

Fig.10

Fig.12

Fig.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 144 240 (A.M. HARRIS)<br>* Whole document * | 1,7-18 | B 01 L 3/02<br>G 01 F 13/00<br>G 01 F 11/02 |
| A | | 3 | |
| | --- | | |
| Y | GB-A-2 002 448 (ELF AQUITAINE)<br>* Whole document * | 1,7-18 | |
| A | | 3 | |
| | ----- | | |

TECHNICAL FIELDS
SEARCHED (Int. Cl.4)

G 01 F
B 01 L

The present search report has been drawn up for all claims

| Place of search | Date of completion of the search | Examiner |
|---|---|---|
| THE HAGUE | 24-05-1988 | ROSE A.R.P. |

EPO FORM 1503 03.82 (P0401)